# EUROPEAN PATENT APPLICATION

(11) **EP 4 826 267 A1**
(43) Date of publication of application: **21.10.2026**
(21) Application number: 25211252.9
(22) Date of filing: 27.10.2025
(51) Int. Cl.: F16C 11/06, B61G 5/02, B61G 7/00, F16C 11/08

(54) **ELASTIC JOINT IN HINGING DEVICE OF LOW-FLOOR VEHICLE**

(30) Priority: 14.04.2025 CN 202510462820
(71) Applicant: Zhuzhou Times New Material Technology Co.,Ltd., Hunan, Zhuzhou 41200 (CN)
(72) Inventor: Feng, Wansheng, Zhuzhou (CN); Tan, Fang, Zhuzhou (CN); Wang, Hao, Zhuzhou (CN); Li, Xinglin, Zhuzhou (CN); Xie, Changwei, Zhuzhou (CN); Yi, Xing, Zhuzhou (CN); Huang, Xin, Zhuzhou (CN); Zhou, Dan, Zhuzhou (CN); Wang, Jinhui, Zhuzhou (CN)
(74) Representative: Zhu, Junyi

(57) **Abstract**

The present invention relates to an elastic joint in a hinging device of a low-floor vehicle comprises an outer seat sleeve, an outer rolling ball sleeve arranged inside the outer seat sleeve, and an inner limiting block arranged inside the outer rolling ball sleeve; opposite surfaces between the outer rolling ball sleeve and the inner limiting block are configured as matching spherical surfaces; a first wear-resistant ball sleeve is vulcanized through first rubber inside the outer seat sleeve; opposite surfaces between the first wear-resistant ball sleeve and the outer rolling ball sleeve are also configured as matching spherical surfaces; and when the inner limiting block is locked on the outer seat sleeve to form the elastic joint, the spherical surfaces between the first wear-resistant ball sleeve and the outer rolling ball sleeve come into contact. When the elastic joint rotates or swings, the action of the elastic joint is borne by the deformation of the first rubber or the action of the elastic joint is borne jointly by the deformation of the first rubber and a friction pair formed between the first wear-resistant ball sleeve and the outer rolling ball sleeve according to the magnitude of a rotating or swinging angle. The elastic joint manufactured by the design method can reduce the degree of wear between a wear-resistant bushing and an outer rolling ball sleeve in an operation process, thereby greatly prolonging the service life of a product.

## Description

### Technical Field

The present invention relates to an elastic joint, and in particular to an elastic joint in a hinging device of a low-floor vehicle, which belongs to the technical field of manufacturing of hinging devices of low-floor vehicles.

### Background

A low-floor light rail vehicle, hereinafter referred to as a low-floor vehicle, is novel transportation equipment in modern cities, and generally has a marshal of three, five or seven carriages connected through a hinging system device. A distance between the vehicle and a rail surface is less than 40 centimeters. A hinging device of a vehicle body is an important part of vehicle body connection of the low-floor vehicle in cities. At present, with the wide application of the low-floor vehicle in Europe, the low-floor vehicle has been promoted domestically, so the market demand for the hinging device has been increasing.

The hinging device of the vehicle body is arranged at a connection part of both ends of the vehicle body, and generally adopts a matching mode of an upper and a lower hinge supports. The main function is to connect a plurality of carriages of the low-floor vehicle, so as to adapt to the need of the vehicle to pass through small-radius horizontal and vertical curves in urban transportation while satisfying the transmission requirements of the tractive force and the braking force of the vehicle.

The Chinese patent application for invention with the publication number of application of CN 105822665 A and the publication date of application of August 3, 2016 discloses an integral metal spherical plain bearing in a fixed hinge of a low-floor vehicle, comprising an outer seat sleeve of a metal spherical plain, an outer rolling ball sleeve arranged inside the outer seat sleeve of the metal spherical plain, an inner rolling ball arranged inside the outer rolling ball sleeve, and a first wear-resistant bushing arranged between the outer seat sleeve of the metal spherical plain and the outer rolling ball sleeve, wherein contact by spherical surfaces is formed between the inner rolling ball and the outer rolling ball sleeve, and between the outer rolling ball sleeve and the first wear-resistant bushing, and an integral metal spherical plain bearing is formed by the outer seat sleeve of the metal spherical plain, the outer rolling ball sleeve, the inner rolling ball and the first wear-resistant bushing through screws.

From the above patent literature, it can be seen that when a product rotates or swings, whether it is a large-angle action or a small-angle action, the rotation or swing is borne by a friction pair formed between the wear-resistant bushing and the outer rolling ball sleeve. In this way, after operation for a long time, it is easy to cause excessive wear, thereby reducing the service life of the product.

In conclusion, a technical problem to be urgently solved is to provide an elastic joint in a hinging device of a low-floor vehicle that can solve the problem of excessive wear between the wear-resistant bushing and the outer rolling ball sleeve of the elastic joint in an operation process and can prolong the service life of the product.

### Summary

A technical problem to be solved in the present invention is to provide an elastic joint in a hinging device of a low-floor vehicle with respect to the defects in the prior art. The elastic joint manufactured by the design method can reduce the degree of wear between a wear-resistant bushing and an outer rolling ball sleeve in an operation process, thereby greatly prolonging the service life of a product.

To solve the above technical problems, the present invention adopts the following technical solutions: an elastic joint in a hinging device of a low-floor vehicle comprises an outer seat sleeve, an outer rolling ball sleeve arranged inside the outer seat sleeve, and an inner limiting block arranged inside the outer rolling ball sleeve; opposite surfaces between the outer rolling ball sleeve and the inner limiting block are configured as matching spherical surfaces; a first wear-resistant ball sleeve is vulcanized through first rubber inside the outer seat sleeve; opposite surfaces between the first wear-resistant ball sleeve and the outer rolling ball sleeve are also configured as matching spherical surfaces; and when the inner limiting block is locked on the outer seat sleeve to form the elastic joint, the spherical surfaces between the first wear-resistant ball sleeve and the outer rolling ball sleeve come into contact.

When the elastic joint rotates or swings, the action of the elastic joint is borne by the deformation of the first rubber or the action of the elastic joint is borne jointly by the deformation of the first rubber and a friction pair formed between the first wear-resistant ball sleeve and the outer rolling ball sleeve according to the magnitude of a rotating or swinging angle.

Preferably, a second wear-resistant ball sleeve is arranged on an inner spherical surface of the outer rolling ball sleeve, second rubber is vulcanized and bonded on an outer spherical surface of the inner limiting block, and when the elastic joint is under rotation or swing, a gap H is reserved between the second rubber and the second wear-resistant ball sleeve; when the elastic joint is under traction or braking, the gap H becomes zero, and flexible frictional contact is formed between the second rubber and the second wear-resistant ball sleeve.

In the process of contact, a first buffering is performed through the first rubber at first, a second buffering is performed through the second rubber, a third buffering is performed through the second wear-resistant ball sleeve, and finally the elastic joint is transversely limited by mutual indirect contact between the inner limiting block and the outer rolling ball sleeve.

Preferably, the second wear-resistant ball sleeve is vulcanized and bonded on the outer spherical surface of the inner limiting block through the second rubber, and when the elastic joint is under rotation or swing, a gap H is reserved between the second wear-resistant ball sleeve and the inner spherical surface of the outer rolling ball sleeve; and when the elastic joint is under traction or braking, flexible frictional contact is formed between the second wear-resistant ball sleeve and the outer rolling ball sleeve.

Preferably, a rubber sealing ring is arranged on the first rubber near a top of the outer seat sleeve; the rubber sealing ring and the first rubber are integrally vulcanized and formed; and after the elastic joint is assembled, one end of the rubber sealing ring comes into contact with the outer spherical surface of the outer rolling ball sleeve to form a first sealing structure for sealing the interior of the elastic joint.

Preferably, an annular step part is arranged near an inner top of the outer rolling ball sleeve, the annular step part is provided with an annular groove, and a sealing ring is arranged in the annular groove; and during assembly, a top plate is compacted on the annular step part, and the top plate is used for compacting and coming into contact with the sealing ring to form a second sealing structure.

Preferably, a top end of the rubber sealing ring is inclined, and is tilted downward along the outer rolling ball sleeve towards the direction of the outer seat sleeve.

Preferably, the first rubber comprises a spherical rubber body, the spherical rubber body is vulcanized and bonded between an inner spherical surface of the outer seat sleeve and an outer spherical surface of the first wear-resistant ball sleeve, and a bottom end of the rubber sealing ring is in contact with one end of the spherical rubber body to form an integrated structure; the inner spherical surface of the outer seat sleeve is also provided with an upward extending shaft column, the other end of the spherical rubber body extends out to form a sleeve-shaped rubber body, an outer peripheral surface of the shaft column is wrapped with the sleeve-shaped rubber body, and a radial spacing K is reserved between the sleeve-shaped rubber body and the outer rolling ball sleeve.

In an operation process, when the outer rolling ball sleeve is deflected under an acting force, during the process of contact between the shaft column with the sleeve-shaped rubber body and the outer rolling ball sleeve, the sleeve-shaped rubber body is first deformed for buffering, and then a deflection direction of the elastic joint is limited by the mutual indirect contact between the shaft column and the outer rolling ball sleeve.

Preferably, a plurality of layers of spacers are arranged inside the spherical rubber body; and the rubber sealing ring wraps a top position of the plurality of layers of spacers, thereby wrapping the top of the plurality of layers of spacers through the rubber sealing ring.

Preferably, a plurality of layers of spacers are arranged inside the spherical rubber body; and the rubber sealing ring wraps the top position of the layer of spacer closest to the outer rolling ball sleeve, thereby wrapping the top of the layer of spacer closest to the outer rolling ball sleeve through the rubber sealing ring.

Preferably, the inner spherical surface of the outer rolling ball sleeve is provided with a first embedding groove, and the second wear-resistant ball sleeve is embedded into the first embedding groove, thereby arranging the second wear-resistant ball sleeve on the inner spherical surface of the outer rolling ball sleeve.

Preferably, a side part of the layer of spacer closest to the outer rolling ball sleeve is provided with a second embedding groove; and first, the spacer is vulcanized and bonded on the outer seat sleeve through the first rubber, and then the first wear-resistant ball sleeve is embedded into the second embedding groove, so that the first wear-resistant ball sleeve is vulcanized inside the outer seat sleeve through the first rubber.

Preferably, a contact spherical surface between the first wear-resistant ball sleeve and the outer rolling ball sleeve is provided with an oil storage tank.

The present invention has the following beneficial effects: when the elastic joint rotates or swings at a small angle, the rotation or swing is borne by the deformation of the rubber located between the first wear-resistant ball sleeve and the outer seat sleeve. At this moment, the first wear-resistant ball sleeve and the outer rolling ball sleeve are relatively stationary. Only when the elastic joint rotates or swings at a large angle, and an acting force exceeds a static friction between the first wear-resistant ball sleeve and the outer rolling ball sleeve, the first wear-resistant ball sleeve and the outer rolling ball sleeve move relatively to form a friction pair. At this moment, the deformation of the rubber and the friction pair jointly bear the rotation or swing of the product. Thus, the degree of wear between the wear-resistant bushing and the outer rolling ball sleeve can be reduced, thereby greatly prolonging the service life of the product. By designing the limiting structure, the elastic joint can be limited in the transverse direction and the deflection direction in the mode of first buffering and then limiting, thereby further optimizing the mechanical properties of the elastic joint and prolonging the service life. By designing the flexible frictional contact between the second rubber and the second wear-resistant ball sleeve, the flexible frictional contact between the outer rolling ball sleeve and the inner limiting block is achieved, thereby avoiding the problem of excessive wear and further prolonging the service life of the entire product. The rubber sealing ring and the rubber are designed as an integrated structure which is vulcanized and bonded on the outer seat sleeve by the rubber, thereby forming a rubber body structure with high strength. When the elastic joint is in an operation process, no matter how the components of the elastic joint rotate or swing, it can ensure that the sealing structure formed by the contact between the outer rolling ball sleeve and the rubber sealing ring has strong tightness and may not have the problem of sealing failure, thereby better preventing external impurities such as sand, water or dust from entering the joint and prolonging the service life of the entire product. In addition, the rubber sealing ring and the rubber are designed as an integrated structure, which can also reduce production cost in manufacturing.

### Description of Drawings

Fig. 1 is an axial sectional structural schematic diagram of an elastic joint in embodiment 1 of the present invention;
Fig. 2 is an amplified structural schematic diagram of A part in Fig. 1;
Fig. 3 is an amplified structural schematic diagram of B part in Fig. 1;
Fig. 4 is an axial sectional structural schematic diagram of a hinging device of a low-floor vehicle in embodiment 1 of the present invention;
Fig. 5 is an amplified structural schematic diagram of C part in Fig. 1;
Fig. 6 is an amplified structural schematic diagram of D part in Fig. 1;
Fig. 7 is a local axial sectional structural schematic diagram of an elastic joint located at a sealing ring in embodiment 2 of the present invention.

In the figures: 1. outer seat sleeve of elastic joint; 111. shaft column; 112. stepped protrusion part; 2. outer rolling ball sleeve; 211. annular step part; 212. annular groove; 3. inner limiting block; 311. stepped groove; 4. first rubber; 411. spherical rubber body; 412. sleeve-shaped rubber body; 5. first wear-resistant ball sleeve; 6. bolt; 7. second wear-resistant ball sleeve; 8. second rubber; 9. first embedding groove; 10. rubber sealing ring; 11. elastic joint; 12. upper fixing support; 13. lower fixing support; 14. spacer; 15. second embedding groove; 16. sealing ring; 17. top plate; 18. oil storage tank.

### Detailed Description

The technical solution of the present invention is further described in detail below in combination with the drawings and specific embodiments.

### Embodiment 1

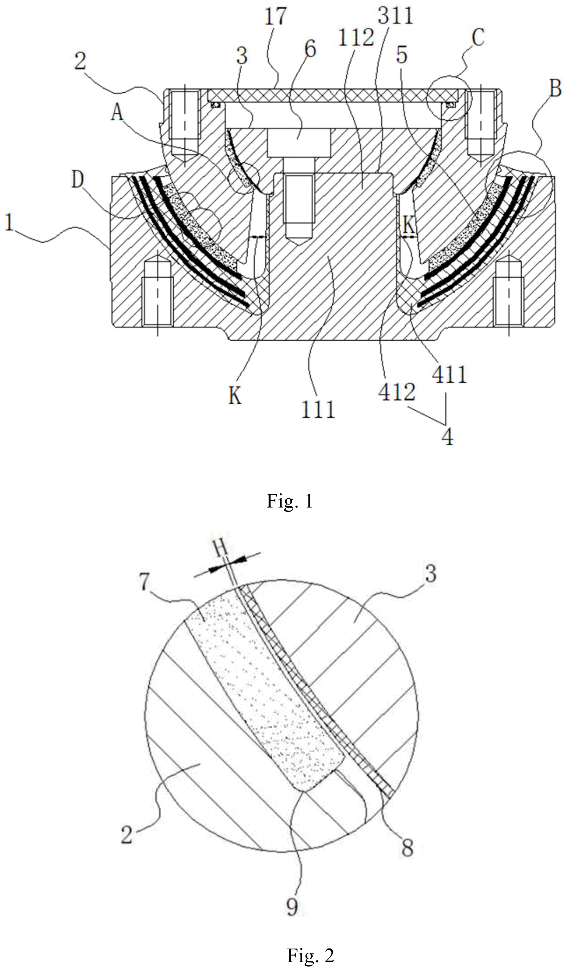

As shown in Fig. 1, an elastic joint in a hinging device of a low-floor vehicle comprises an outer seat sleeve 1 of the elastic joint, an outer rolling ball sleeve 2 arranged inside the outer seat sleeve 1 of the elastic joint, and an inner limiting block 3 arranged inside the outer rolling ball sleeve 2; opposite surfaces between the outer rolling ball sleeve 2 and the inner limiting block 3 are configured as matching spherical surfaces; a first wear-resistant ball sleeve 5 is vulcanized through first rubber 4 inside the outer seat sleeve 1 of the elastic joint; opposite surfaces between the first wear-resistant ball sleeve 5 and the outer rolling ball sleeve 2 are also configured as matching spherical surfaces; and when the inner limiting block 3 is locked on the outer seat sleeve 1 of the elastic joint through bolts 6 to enable the inner limiting block 3, the outer rolling ball sleeve 2, the first wear-resistant ball sleeve 5 and the outer seat sleeve 1 of the elastic joint to form the elastic joint, the spherical surfaces between the first wear-resistant ball sleeve 5 and the outer rolling ball sleeve 2 come into contact. In the present embodiment, through the above design, when the elastic joint rotates or swings at a small angle, the rotation or swing is borne by the deformation of the rubber located between the first wear-resistant ball sleeve and the outer seat sleeve. At this moment, the first wear-resistant ball sleeve and the outer rolling ball sleeve are relatively stationary. Only when the elastic joint rotates or swings at a large angle, and an acting force exceeds a static friction between the first wear-resistant ball sleeve and the outer rolling ball sleeve, the first wear-resistant ball sleeve and the outer rolling ball sleeve move relatively to form a friction pair. At this moment, the deformation of the rubber and the friction pair jointly bear the rotation or swing of a product. Thus, the degree of wear between the wear-resistant bushing and the outer rolling ball sleeve can be reduced, thereby greatly prolonging the service life of the product. In addition, by arranging the rubber, the noise generated by vehicle bodies can also be reduced and the vibration is reduced. In addition, most of the existing components of the elastic joint are made of metal. Due to the problem of processing accuracy, after assembly, the matching accuracy between the components is not high, which will also lead to a reduction in the service life in the operation process. However, in the present embodiment, the characteristic of flexible deformation of the rubber is utilized, so that the matching accuracy between the components can be adaptively adjusted in the operation process, thereby further prolonging the service life.

As shown in Fig. 1 and Fig. 2, an inner spherical surface of the outer rolling ball sleeve 2 is provided with a second wear-resistant ball sleeve 7, second rubber 8 is vulcanized and bonded on an outer spherical surface of the inner limiting block 3, and when the elastic joint is under an operating condition such as rotation or swing, a gap H is reserved between the second rubber 8 and the second wear-resistant ball sleeve 7. When the elastic joint is under an operating condition such as traction or braking, the gap H becomes zero, and flexible frictional contact is formed between the second rubber 8 and the second wear-resistant ball sleeve 7, which achieves flexible frictional contact between the outer rolling ball sleeve 2 and the inner limiting block 3, thereby avoiding the problem of excessive wear and further prolonging the service life of the entire product. In addition, the properties of the product, such as stiffness, fatigue performance, load-bearing capacity, and oil resistance, can be finely adjusted by adjusting the properties of the rubber material, such as types of the rubber (natural rubber, nitrile butadiene rubber, and hydrogenated nitrile butadiene rubber), and a rubber formula ratio, and a flexible design characteristic is achieved. In the present embodiment, the inner spherical surface of the outer rolling ball sleeve 2 is provided with a first embedding groove 9, and the second wear-resistant ball sleeve 7 is embedded into the first embedding groove 9, thereby arranging the second wear-resistant ball sleeve 7 on the inner spherical surface of the outer rolling ball sleeve 2. This embedded structural design facilitates the subsequent replacement of the second wear-resistant ball sleeve and reduces maintenance cost. Here, another structure can also be adopted, that is, the second wear-resistant ball sleeve 7 is vulcanized on the inner limiting block 3 through the second rubber 8, so that a gap H is reserved between the second wear-resistant ball sleeve 7 and the inner spherical surface of the outer rolling ball sleeve 2. When the product is under an operating condition such as traction or braking, the gap H becomes zero, and flexible frictional contact is formed between second wear-resistant ball sleeve 7 and the outer rolling ball sleeve 2 (not shown in the figure).

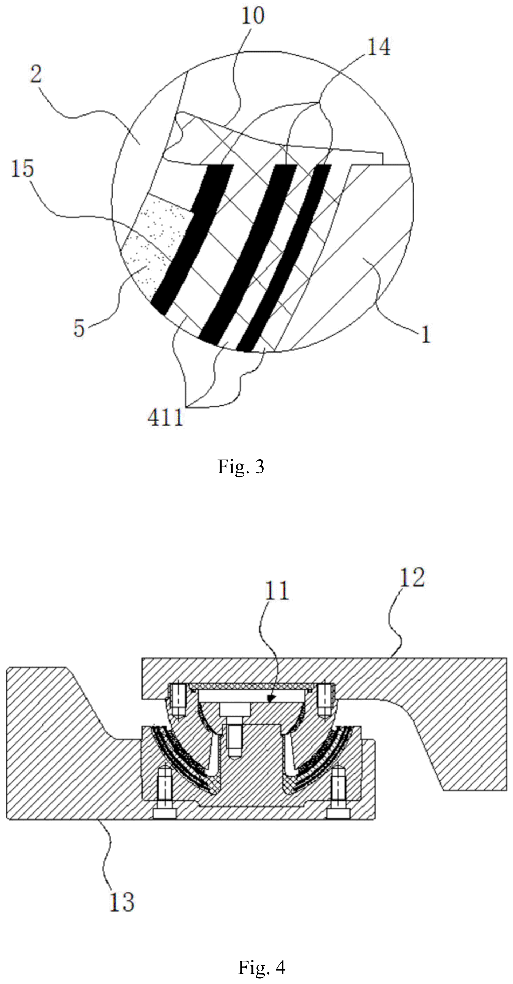

As shown in Fig. 1 and Fig. 3, a rubber sealing ring 10 is arranged on the first rubber 4 near a top of the outer seat sleeve 1 of the elastic joint; the rubber sealing ring 10 and the first rubber 4 are integrally vulcanized and formed; and after the elastic joint is assembled, one end of the rubber sealing ring 10 comes into contact with the outer spherical surface of the outer rolling ball sleeve 2 to form a first sealing structure for sealing the interior of the elastic joint. In the elastic joint mentioned in the background, to prevent external impurities such as sand, water or dust from entering the joint, a sealing ring groove is formed in an inner peripheral surface of the outer seat sleeve, and a sealing ring is arranged in the sealing ring groove to seal the interior of the joint. However, the existing sealing structure only uses an independent sealing ring for sealing, but during operation, the elastic joint can rotate and swing at a particular angle in a vertical, a transverse and a longitudinal directions. In this way, the tightness of the sealing ring may not be very stable, and sometimes the sealing of the sealing ring may fail, resulting in the inability to achieve a sealing effect at this location and reducing the service life of the entire product. In the present embodiment, the rubber sealing ring and the rubber are designed as an integrated structure which is vulcanized and bonded on the outer seat sleeve by the rubber, thereby forming a rubber body structure with high strength. When the elastic joint is in an operation process, no matter how the components of the elastic joint rotate or swing, it can ensure that the sealing structure formed by the contact between the outer rolling ball sleeve 2 and the rubber sealing ring 10 has strong tightness and may not have the problem of sealing failure, thereby better preventing external impurities such as sand, water or dust from entering the joint and prolonging the service life of the entire product. In addition, the rubber sealing ring and the first rubber are designed as an integrated structure, which can also reduce production cost in manufacturing.

As shown in Fig. 4, the entire elastic joint 11 connects adjacent vehicle bodies through an upper fixing support 12 and a lower fixing support 13. The entire elastic joint 11 is applied to a hinging device of the vehicle bodies, which satisfies complex loading operating conditions of large deflection angles in the vertical, the transverse and the longitudinal directions; the elastic joint 11 is automatically centered; the spherical surface of the outer seat sleeve 1 of the elastic joint, the spherical surface of the first wear-resistant ball sleeve 5, the spherical surface of the outer rolling ball sleeve 2, the spherical surface of the second wear-resistant ball sleeve 7 and the spherical surface of the inner limiting block 3 all have a common center of sphere; and the elastic joint 11 can make three independent relative rotations around the center of sphere. The first wear-resistant ball sleeve 5 and the second wear-resistant ball sleeve 7 can be both made of wear-resistant material such as polyester, copper-embedded graphite or PTFE.

As shown in Fig. 1 and Fig. 3, one end of the rubber sealing ring 10 is designed in a double-lip shape. After assembly, one end of the double-lip shape of the rubber sealing ring 10 comes into contact with the outer spherical surface of the outer rolling ball sleeve 2 to form a first sealing structure for sealing the interior of the elastic joint. The first rubber 4 comprises a spherical rubber body 411, the spherical rubber body 411 is vulcanized and bonded between an inner spherical surface of the outer seat sleeve 1 of the elastic joint and an outer spherical surface of the first wear-resistant ball sleeve 5, and a bottom end of the rubber sealing ring 10 is in contact with one end of the spherical rubber body 411 to form an integrated structure. This increases the contact area between the rubber sealing ring 10 and the spherical rubber body 411, thereby making the entire rubber structure more robust and higher in strength.

A top end of the rubber sealing ring 10 is designed to be inclined, and the top end of the rubber sealing ring 10 is tilted downward along the outer rolling ball sleeve 2 towards the direction of the outer seat sleeve 1 of the elastic joint. In this way, sewage flowing to the top end of the rubber sealing ring may flow out along the top end of the inclined rubber sealing ring 10, and may not accumulate here. The inner spherical surface of the outer seat sleeve 1 of the elastic joint is also provided with an upward extending shaft column 111, the shaft column 111 and the outer seat sleeve 1 of the elastic joint form an integrated structure, the other end of the spherical rubber body 411 extends out to form a sleeve-shaped rubber body 412, an outer peripheral surface of the shaft column 111 is wrapped with the sleeve-shaped rubber body 412, and a radial spacing K is reserved between the sleeve-shaped rubber body 412 and the outer rolling ball sleeve 2. The shaft column is wrapped with the sleeve-shaped rubber body, which can achieve the functions of rust resistance and corrosion resistance and also increase the overall volume of the rubber and the vulcanization and bonding area between the rubber and the outer seat sleeve, thereby further enhancing the overall strength of the rubber. A stepped protrusion part 112 is arranged at the top of the shaft column 111. A bottom surface of the inner limiting block 3 is provided with a stepped groove 311 that matches the stepped protrusion part 112. During installation, the stepped protrusion part 112 is in contact with the stepped groove 311 through matching so that the inner limiting block 3 is clamped into the shaft column 111 of the outer seat sleeve 1 of the elastic joint, and then the inner limiting block 3 is locked onto the outer seat sleeve 1 of the elastic joint through bolts 6 so that the inner limiting block 3, the outer rolling ball sleeve 2, the first wear-resistant ball sleeve 5 and the outer seat sleeve 1 of the elastic joint form the elastic joint. In the present embodiment, the inner limiting block and the shaft column are installed through a stepped matching structure. When the product is under an operating condition such as traction or braking, the elastic joint is transversely limited by spherical contact between the second wear-resistant ball sleeve and the inner limiting block, which can further enhance the radial stiffness of the elastic joint.

As shown in Fig. 1 and Fig. 3, spacers 14 are arranged inside the spherical rubber body 411, and the spacers 14 may be arranged in a plurality of layers and can be made of metal material. By arranging the spacers 14 inside the spherical rubber body 411, especially when a plurality of layers of spacers 14 are arranged, the product can have small deflection stiffness and torsional stiffness, thereby making the derived stiffness of the vehicle bodies small, ensuring that the product has large vertical stiffness and radial stiffness, further optimizing the mechanical properties of the product and prolonging the service life. In addition, when the spacers 14 adopt the plurality of layers of spacers, the rubber sealing ring 10 wraps the top position of the plurality of layers of spacers. In this way, the top of the plurality of layers of spacers is wrapped with the rubber sealing ring 10, which can also prevent the spacers from corroding. In addition, the number of the spacers, the thickness of the spacers and the layer thickness of the rubber can be adjusted to regulate the mechanical properties of the product to achieve flexible design.

As shown in Fig. 3, a side part of a layer of spacer 14 closest to the outer rolling ball sleeve 2 is provided with a second embedding groove 15. During manufacturing, first, the spacer 14 is vulcanized and bonded on the outer seat sleeve 1 of the elastic joint through the first rubber 4, and then the first wear-resistant ball sleeve 5 is embedded into the second embedding groove 15 on the spacer 14, so that the first wear-resistant ball sleeve 5 is vulcanized inside the outer seat sleeve 1 of the elastic joint through the first rubber 4. Here, if the first wear-resistant ball sleeve is directly vulcanized and bonded with the rubber, due to material properties therebetween, a bonding effect therebetween may not be very good. In addition, since the first wear-resistant ball sleeve can be made of wear-resistant material such as polyester, copper-embedded graphite or PTFE, in order to ensure the bonding effect therebetween, the bonding performance of various materials also needs to be studied and analyzed, which is complicated. In addition, if the first wear-resistant ball sleeve is vulcanized and bonded with the rubber, it does not facilitate the subsequent replacement of the first wear-resistant ball sleeve and increases the maintenance cost. Therefore, in the present embodiment, the spacer is first vulcanized and bonded with the rubber, and then the first wear-resistant ball sleeve is installed on the spacer by an embedded method. In this way, the influence of the material properties of the first wear-resistant ball sleeve on the bonding effect is not required to be considered, thereby ensuring the installation effect of the first wear-resistant ball sleeve and reducing the manufacturing difficulty, and in subsequent maintenance, the first wear-resistant ball sleeve can be replaced conveniently and quickly, which also reduces the maintenance cost.

As shown in Fig. 1 and Fig. 2, in the present embodiment, a limiting method for the elastic joint is also improved. The limiting method is an improvement on the transverse limiting and the deflection direction limiting of the elastic joint, i.e., the transverse limiting and the deflection direction limiting are performed by first buffering and then limiting. The transverse limiting by the method of first buffering and then limiting means that in the operation process, under a transverse acting force, the first rubber 4 first generates deformation for buffering, and then the second wear-resistant ball sleeve 7 and the second rubber 8 come into contact with each other for limiting. Here, since the second wear-resistant ball sleeve 7 is not made of metal, and the material of the second rubber 8 is softer than that of the second wear-resistant ball sleeve 7, in a limiting process, the second rubber 8 and the second wear-resistant ball sleeve 7 can achieve the functions of second buffering and third buffering respectively, i.e., the first buffering is first performed through the first rubber 4, then the second buffering is performed through the second rubber 8, the third buffering is performed through the second wear-resistant ball sleeve 7, and finally, limiting is performed through the mutual indirect contact between the inner limiting block 3 and the outer rolling ball sleeve 2. Here, the first rubber 4 especially refers to the rubber located at the plurality of layers of spacers.

The deflection direction limiting by the method of first buffering and then limiting means that in the operation process, when the outer rolling ball sleeve 2 is deflected under an acting force, in the process of contact between the shaft column 111 with the sleeve-shaped rubber body 412 and the outer rolling ball sleeve 2, the sleeve-shaped rubber body 412 first generates deformation for buffering and then limiting is performed through the mutual indirect contact between the shaft column 111 and the outer rolling ball sleeve 2.

In the present embodiment, by designing the above limiting structure, the elastic joint can be limited in the transverse direction and the deflection direction in the mode of first buffering and then limiting, thereby further optimizing the mechanical properties of the elastic joint and prolonging the service life.

As shown in Fig. 1, the end rubber at one end of the spherical rubber body 411 near the bottom of the shaft column 111 is thickened. In this way, in the operation process, the functions of first buffering and then limiting can be performed on the spacer.

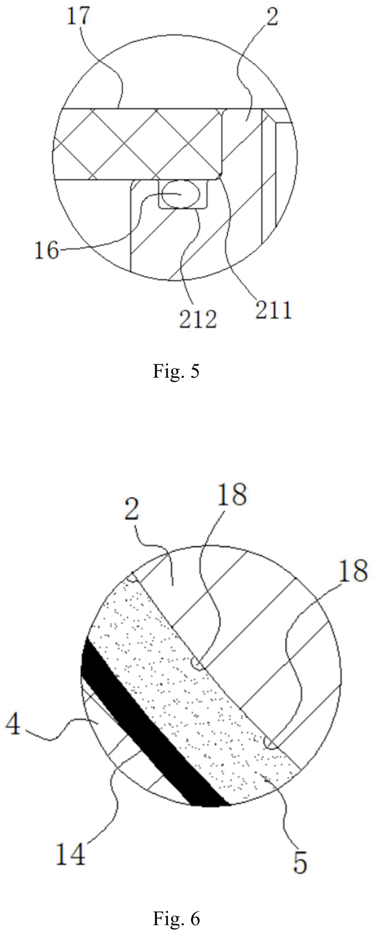

As shown in Fig. 1 and Fig. 5, an annular step part 211 is arranged near an inner top of the outer rolling ball sleeve 2, the annular step part 211 is provided with an annular groove 212, and a sealing ring 16 is arranged in the annular groove 212; and during assembly, a top plate 17 is compacted on the annular step part 211 so that the top plate 17 is used for compacting and coming into contact with the sealing ring 16 to form a second sealing structure, thereby further enhancing the sealing performance of the entire product. The top plate 17 can be made of material such as nylon.

As shown in Fig. 1 and Fig. 6, a contact spherical surface between the first wear-resistant ball sleeve 5 and the outer rolling ball sleeve 2 is provided with an oil storage tank 18. The oil storage tank 18 can be arranged on the outer rolling ball sleeve 2 or arranged on the first wear-resistant ball sleeve 5 as in the present embodiment. During operation, by storing lubricating grease in the oil storage tank 18, the degree of wear of the product during movement can be reduced, thereby further improving a lubrication effect.

### Embodiment 2

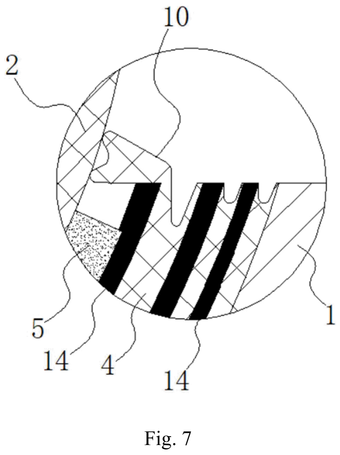

In embodiment 1, as shown in Fig. 3, when a plurality of layers of spacers 14 are arranged inside the spherical rubber body 411, in the operation process, the top of the plurality of layers of spacers 14 may exert a shear force on the rubber sealing ring 10 that wraps the top, thereby forming rubber fatigue, which causes the damage to the rubber here and reduces the service life. Thus, in the present embodiment, as shown in Fig. 7, the differences from embodiment 1 lie in that: when the spacers 14 adopt the plurality of layers of spacers, the rubber sealing ring 10 and the first rubber 4 are integrally vulcanized and molded, and the rubber sealing ring 10 only wraps the top position of a layer of spacer 14 closest to the outer rolling ball sleeve 2. In this way, the rubber sealing ring 10 only wraps one layer of spacer, which can reduce the shear force generated therebetween, thereby avoiding damaging the rubber here, and prolonging the service life.

In conclusion, through the design in the present invention, when the elastic joint rotates or swings at a small angle, the rotation or swing is borne by the deformation of the rubber located between the first wear-resistant ball sleeve and the outer seat sleeve. At this moment, the first wear-resistant ball sleeve and the outer rolling ball sleeve are relatively stationary. Only when the elastic joint rotates or swings at a large angle, and an acting force exceeds a static friction between the first wear-resistant ball sleeve and the outer rolling ball sleeve, the first wear-resistant ball sleeve and the outer rolling ball sleeve move relatively to form a friction pair. At this moment, the deformation of the rubber and the friction pair jointly bear the rotation or swing of the product. Thus, the degree of wear between the wear-resistant bushing and the outer rolling ball sleeve can be reduced, thereby greatly prolonging the service life of the product. By designing the limiting structure, the elastic joint can be limited in the transverse direction and the deflection direction in the mode of first buffering and then limiting, thereby further optimizing the mechanical properties of the elastic joint and prolonging the service life. By designing the flexible frictional contact between the second rubber and the second wear-resistant ball sleeve, the flexible frictional contact between the outer rolling ball sleeve and the inner limiting block is achieved, thereby avoiding the problem of excessive wear and further prolonging the service life of the entire product. The rubber sealing ring and the rubber are designed as an integrated structure which is vulcanized and bonded on the outer seat sleeve by the rubber, thereby forming a rubber body structure with high strength. When the elastic joint is in an operation process, no matter how the components of the elastic joint rotate or swing, it can ensure that the sealing structure formed by the contact between the outer rolling ball sleeve and the rubber sealing ring has strong tightness and may not have the problem of sealing failure, thereby better preventing external impurities such as sand, water or dust from entering the joint and prolonging the service life of the entire product. In addition, the rubber sealing ring and the rubber are designed as an integrated structure, which can also reduce production cost in manufacturing.

"A plurality of" in the embodiments means a quantity of "two or more than two". The above embodiments are merely used for illustration of the present invention, and not intended to limit the present invention. Various changes or transformations can also be made by those skilled in the art without departing from the spirit and the scope of the present invention. Therefore, all equivalent technical solutions shall also belong to the protection scope of the present invention, and the protection scope of the present invention shall be defined by the claims.

## Claims

1. An elastic joint in a hinging device of a low-floor vehicle comprises an outer seat sleeve, **characterized in that**: an outer rolling ball sleeve (2) arranged inside the outer seat sleeve (1), and an inner limiting block (3) arranged inside the outer rolling ball sleeve (2); opposite surfaces between the outer rolling ball sleeve (2) and the inner limiting block (3) are configured as matching spherical surfaces; a first wear-resistant ball sleeve (5) is vulcanized through first rubber (4) inside the outer seat sleeve (1); opposite surfaces between the first wear-resistant ball sleeve (5) and the outer rolling ball sleeve (2) are also configured as matching spherical surfaces; and when the inner limiting block (3) is locked on the outer seat sleeve (1) to form the elastic joint, the spherical surfaces between the first wear-resistant ball sleeve (5) and the outer rolling ball sleeve (2) come into contact.

2. The elastic joint in a hinging device of a low-floor vehicle comprises an outer seat sleeve according to claim I, **characterized in that**: a second wear-resistant ball sleeve (7) is arranged on an inner spherical surface of the outer rolling ball sleeve (2), second rubber (8) is vulcanized and bonded on outer spherical surface of the inner limiting block (3), and when the elastic joint is under rotation or swing, a gap H is reserved between the second rubber (8) and the second wear-resistant ball sleeve (7); when the elastic joint is under traction or braking, the gap H becomes zero, and flexible frictional contact is formed between the second rubber (8) and the second wear-resistant ball sleeve (7).

3. The elastic joint in a hinging device of a low-floor vehicle comprises an outer seat sleeve according to claim I, **characterized in that**: the second wear-resistant ball sleeve (7) is vulcanized and bonded on the outer spherical surface of the inner limiting block (3) through the second rubber (8), and when the elastic joint is under rotation or swing, a gap H is reserved between the second wear-resistant ball sleeve (7) and the inner spherical surface of the outer rolling ball sleeve (2); and when the elastic joint is under traction or braking, flexible frictional contact is formed between the second wear-resistant ball sleeve (7) and the outer rolling ball sleeve (2).

4. The elastic joint in a hinging device of a low-floor vehicle comprises an outer seat sleeve according to claim I, **characterized in that**: a rubber sealing ring (10) is arranged on the first rubber (4) near a top of the outer seat sleeve (1); the rubber sealing ring (10) and the first rubber (4) are integrally vulcanized and formed; and after the elastic joint is assembled, one end of the rubber sealing ring (10) comes into contact with the outer spherical surface of the outer rolling ball sleeve (2) to form a first sealing structure for sealing the interior of the elastic joint.

5. The elastic joint in a hinging device of a low-floor vehicle comprises an outer seat sleeve according to claim 4, **characterized in that**: an annular step part (211) is arranged near an inner top of the outer rolling ball sleeve (2), the annular step part (211) is provided with an annular groove (212), and a sealing ring (16) is arranged in the annular groove (212); and during assembly, a top plate (17) is compacted on the annular step part (211), and the top plate (17) is used for compacting and coming into contact with the sealing ring (16) to form a second sealing structure.

6. The elastic joint in a hinging device of a low-floor vehicle comprises an outer seat sleeve according to claim 4, **characterized in that**: a top end of the rubber sealing ring (10) is inclined, and is tilted downward along the outer rolling ball sleeve (2) towards the direction of the outer seat sleeve (1).

7. The elastic joint in a hinging device of a low-floor vehicle comprises an outer seat sleeve according to claim 4, **characterized in that**: the first rubber (4) comprises a spherical rubber body (411), the spherical rubber body (411) is vulcanized and bonded between an inner spherical surface of the outer seat sleeve (1) and an outer spherical surface of the first wear-resistant ball sleeve (5), and a bottom end of the rubber sealing ring (10) is in contact with one end of the spherical rubber body (411) to form an integrated structure; the inner spherical surface of the outer seat sleeve (1) is also provided with an upward extending shaft column (111), the other end of the spherical rubber body (411) extends out to form a sleeve-shaped rubber body (412), an outer peripheral surface of the shaft column (111) is wrapped with the sleeve-shaped rubber body (412), and a radial spacing K is reserved between the sleeve-shaped rubber body (412) and the outer rolling ball sleeve (2).

8. The elastic joint in a hinging device of a low-floor vehicle comprises an outer seat sleeve according to claim 7, **characterized in that**: a plurality of layers of spacers (14) are arranged inside the spherical rubber body (411); and the rubber sealing ring (10) wraps a top position of the spacers (14), thereby wrapping the top of the spacers (14) through the rubber sealing ring.

9. The elastic joint in a hinging device of a low-floor vehicle comprises an outer seat sleeve according to claim 7, **characterized in that**: a plurality of layers of spacers (14) are arranged inside the spherical rubber body (411); and the rubber sealing ring (10) wraps the top position of the spacer (14) closest to the outer rolling ball sleeve (2), thereby wrapping the top of the spacer (14) closest to the outer rolling ball sleeve (2) through the rubber sealing ring (10).

10. The elastic joint in a hinging device of a low-floor vehicle comprises an outer seat sleeve according to claim 2, **characterized in that**: the inner spherical surface of the outer rolling ball sleeve (2) is provided with a first embedding groove (9), and the second wear-resistant ball sleeve (7) is embedded into the first embedding groove (9), thereby arranging the second wear-resistant ball sleeve (7) on the inner spherical surface of the outer rolling ball sleeve (2).

11. The elastic joint in a hinging device of a low-floor vehicle comprises an outer seat sleeve according to claim 8 or 9, **characterized in that**: a side part of the spacer (14) closest to the outer rolling ball sleeve (2) is provided with a second embedding groove (15); and first, the spacer (14) is vulcanized and bonded on the outer seat sleeve (1) through the first rubber (4), and then the first wear-resistant ball sleeve (5) is embedded into the second embedding groove (15), so that the first wear-resistant ball sleeve (5) is vulcanized inside the outer seat sleeve (1) through the first rubber (4).

12. The elastic joint in a hinging device of a low-floor vehicle comprises an outer seat sleeve according to claim I, **characterized in that**: a contact spherical surface between the first wear-resistant ball sleeve (5) and the outer rolling ball sleeve (2) is provided with an oil storage tank (18).
